(19) Europäisches Patentamt
European Patent Office
Office européen des brevets

(11) Publication number: **0 190 357 B1**

# (12) EUROPEAN PATENT SPECIFICATION

(45) Date of publication of patent specification: **02.10.91**

(51) Int. Cl.5: **B23Q 33/00**

(21) Application number: **85903703.8**

(22) Date of filing: **22.07.85**

(86) International application number:
**PCT/JP85/00414**

(87) International publication number:
**WO 86/00845 (13.02.86 86/04)**

## (54) APPARATUS FOR CONTROLLING PROFILING IN ANY DIRECTION.

(30) Priority: **27.07.84 JP 157006/84**

(43) Date of publication of application:
**13.08.86 Bulletin 86/33**

(45) Publication of the grant of the patent:
**02.10.91 Bulletin 91/40**

(84) Designated Contracting States:
**DE FR GB IT**

(56) References cited:
**EP-A- 42 304**
**EP-A- 146 629**
**JP-A- 571 644**
**JP-A-57 168 846**

**See also references of WO8600845**

(73) Proprietor: **FANUC LTD.**
**3580, Shibokusa Aza-Komanba, Oshino-mura**
**Minamitsuru-gun, Yamanashi 401-05(JP)**

(72) Inventor: **MATSUURA, Hitoshi 1-406 Keio-Yamada-Mansion**
**Midori-cho Hachioji-shi**
**Tokyo 193(JP)**
Inventor: **SAKURAI, Hiroshi 202, Kabutoyama-Height**
**4-36-7, Toyoda Hino-shi**
**Tokyo 191(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

EP 0 190 357 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to improvements in an arbitrary-direction tracer control unit which permits arbitrary setting of the tracer feed direction. An example of such a unit is disclosed in EP-A-0042304.

In arbitrary-direction tracing in which the tracer feed direction in an X-Y plane is a direction at an angle $\alpha$ (an A-axis) with respect to the X-axis as depicted in Fig. 5, tracer feed rates Va and Vz in the A-axis and the Z-axis are derived from a deflection signal obtained from a tracer head. Operations $Vx = Va \cdot \cos\alpha$ and $Vy = Va \cdot \sin\alpha$ are conducted using the feed rate Va to obtain tracer feed rates Vx and Vy, and a model is driven in the X-, Y- and Z-axes at the speeds corresponding to the tracer feed rates Vx, Vy, and Vz.

Previously proposed arbitrary-direction tracer control equipment is of the type that prestores the angle $\alpha$ between the X-axis and the A-axis in a memory, and performs the above-mentioned operations on the basis of the stored contents of the memory to obtain the feed rates in the X- and Y-axis directions. The tracer feed direction cannot be changed unless the stored contents of the memory are changed. Accordingly, with the previously proposed equipment, it is difficult for an operator to change the tracer feed direction while monitoring the cutting conditions.

The present invention obviates such a defect as mentioned above, and has for its object to permit an easy change of the tracer feed direction even during tracing.

According to the present invention there is provided an arbitrary-direction tracer control unit comprising a tracer head for outputting a deflection signal corresponding to the deflection of a stylus in contact with the surface of a model, characterised by: a memory for storing a commanded angle between a coordinate axis and the tracer feed axis; a correction angle setting means for setting a correction angle with respect to the tracer feed axis; an adder means for adding together the commanded angle stored in the memory and the correction angle set by the correction angle setting means; and a tracing operation means for obtaining, on the basis of the added output of the adder means and the deflection signal from the tracer head, feed rates in the axis directions in which the model and the stylus are moved relative to each other which will drive the tracer head relative to the model in a direction corresponding to the added output from the adder means.

For a better understanding of the present invention and to show how it may be put into effect reference will now be made, by way of example, to the accompanying drawings, in which:

Fig. 1 is a block diagram illustrating the arrangement of the present invention;

Fig. 2 is a block diagram illustrating an embodiment of the present invention;

Fig. 3 is a flowchart showing the contents of processing by a microprocessor 17;

Fig. 4 is a diagram schematically showing a cutting path according to the present invention; and

Fig. 5 is a diagram for explaining arbitrary-direction tracing:

Fig. 1 is a block diagram illustrating the arrangement of the present invention. A memory means M has stored therein a commanded angle indicating the direction of the tracer feed axis, that is, an angle between the X-axis and the tracer feed axis. A correction angle setting means COM is to set a correction angle with respect to the tracer feed axis direction. An adder means ADD adds together the angle stored in the memory means M and the correction angle set by the correction angle setting means COM and then provides the added output to a tracing operation means PRO. Based on the results of the addition by the adder means ADD and a deflection signal corresponding to the deflection of a stylus ST provided from a tracer head TH, the tracing operation means PRO obtains the feed rate in each axis direction at which the model and the tracer head are moved relative to each other, thereby to provide the direction corresponding to the results of the addition by the adder means ADD.

Fig. 2 illustrates in block form an embodiment of the present invention. Reference numeral 1 indicates a tracer head, 2 a stylus, 3 a composite deflection signal generator, 4 an adder, 5 and 6 velocity calculation circuits for obtaining normal-direction velocity $V_N$ and tangential-direction velocity $V_T$, 7 a distribution circuit, 8 and 9 coordinate converters, 10 an indexing circuit, 11 to 13 X-, Y- and Z-axis amplifiers, 14 to 16 X-, Y- and Z-axis motors, 17 a microprocessor, 18 an output port, 19 a memory, 20 a keyboard, and 21 a correction angle setting dial for setting a correction angle with respect to the tracer feed direction. In an area #N of the memory 19 is stored a commanded angle between the tracer feed axis and the X-axis, i.e. the angle $\alpha$ indicating the direction of the tracer feed axis.

Upon starting of the tracing operation, the tracer head 1 outputs deflection signals $\epsilon_x$, $\epsilon_y$, and $\epsilon_z$ corresponding to deflections of the stylus 2 in the X-, Y- and Z-axis directions. The deflection signals $\epsilon_x$ and $\epsilon_y$ are provided to the composite deflection signal generator 3 and the coordinate converter 9, and the deflection signal $\epsilon_z$ is applied to the composite deflection signal generator 3 and the indexing circuit 10. The composite deflection signal generator 3 derives from the deflection signals $\epsilon_x$, $\epsilon_x$, and $\epsilon_z$ a composite deflection signal $\epsilon = \sqrt{\epsilon_x^2 + \epsilon_y^2 + \epsilon_z^2}$, which is provided to the adder 4. The adder 4 obtains a difference $\Delta\epsilon = \epsilon - \epsilon_0$ between the composite deflection signal $\epsilon$ and a reference deflecticn signal $\epsilon_0$ which is applied to the adder from the microprocessor 17 via the output port 18. The thus obtained difference is supplied to the velocity calculation circuits 5 and 6. The velocity calculation circuits 5 and 6 obtain the normal-direction velocity $V_N$ and the tangential-direction velocity $V_T$ on the basis of the abovesaid difference $\Delta\epsilon$, and provide the velocities to the distribution circuit 7.

The coordinate converter 9 creates a deflection component signal $\epsilon\alpha$ indicating a deflection component in the tracer feed axis direction, by performing an operation of the following equation (1) on the basis of the deflection signals $\epsilon_x$ and $\epsilon_y$ and signals $\sin\alpha$ and $\cos\alpha$ which are indicative of the cosine and sine of the angle between the tracer feed axis A and the X-axis and are provided via the output port 18 to the coordinate converter. The deflection component signal thus produced is applied to the indexing circuit 10. The signals $\sin\alpha$ and $\cos\alpha$ are produced by the microprocessor 17 based on the angle $\alpha$ stored in the area #N of the memory 19.

$$\epsilon\alpha = \epsilon_x \cdot \cos\alpha + \epsilon_y \cdot \mathrm{Sin}\alpha \qquad (1)$$

The indexing circuit 10 yields a cosine signal $\cos\beta$ and a sine signal $\sin\beta$ of the direction of deflection in a plane containing the A-axis and the Z-axis which are based on the deflection component signal $\epsilon\alpha$ from the coordinate converter 9 and the deflection signal $\epsilon_z$, the cosine and sine signals being applied to the distribution circuit 7. The distribution circuit 7 derives a velocity signal Va in the direction of the tracer feed axis and a velocity signal Vz in the Z-axis direction from the cosine signal $\cos\beta$, the sine signal $\sin\beta$ and the normal-direction velocity $V_N$ and the tangential-direction velocity $V_T$ provided from the velocity calculation circuits 5 and 6. The velocity signal Vz in the Z-axis direction is applied to the amplifier 13, the output of which is provided to the motor 16 to drive it. The velocity signal Va in the direction of the tracer feed axis is provided to the coordinate converter 8, wherein operations of the following equations (2) and (3) are performed, obtaining velocity signals Vx and Vy in the X-axis and Y-axis directions.

$$Vx = Va \cdot \cos\alpha \qquad (2)$$
$$Vy = Va \cdot \sin\alpha \qquad (3)$$

The velocity signals Vx and Vy in the X-axis and Y-axis directions are respectively applied to the amplifiers 11 and 12, the outputs of which are provided to the motors 14 and 15 to drive them, effecting a tracer feed in the A-axis direction.

In the case of changing the tracer feed direction during the tracer feed in the A-axis direction as described above, an operator sets a correction angle $\Delta\alpha$ on the correction angle setting dial 21, and at the same time enters from the keyboard 20 a command of changing the tracer feed axis. The microprocessor 17 responds to the command to start the processing of the flowchart shown in Fig. 3.

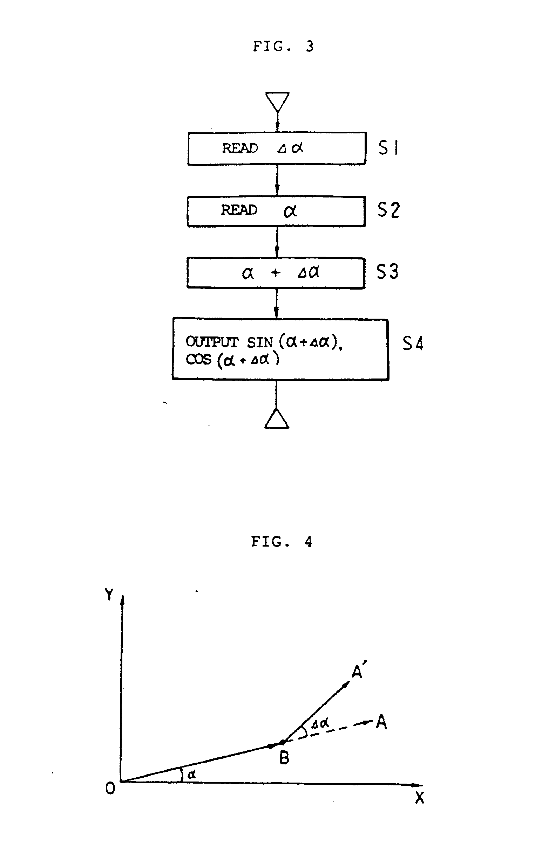

Upon starting the flowchart depicted in Fig. 3, the microprocessor 17 first reads the correction angle $\Delta\alpha$ set on the correction angle setting dial 21 (step S1), reads the angle $\alpha$ between the X-axis and the A-axis stored in the predetermined area #N of the memory 19 (step S2), adds together the angles $\Delta\alpha$ and $\alpha$ (step S3), and supplies the coordinate converters 8 and 9 with signals $\sin(\alpha + \Delta\alpha)$ and $\cos(\alpha + \Delta\alpha)$ created on the basis of the added result $\Delta\alpha + \alpha$ (step S4). As a result of this, the processes of steps S1 to S4 take place during cutting at a point B, by which the tracer feed axis is changed from the A-axis to an A'-axis, as illustrated in Fig. 4.

As described above, there is provided a correction angle setting means in the form of the correction angle setting dial 21 for setting a correction angle with respect to the tracer feed axis, and an adder means for adding together the correction angle and the angle representing the direction of the tracer feed axis, stored in a memory means. Since the tracer feed direction can be changed by setting the correction angle with the correction angle setting means, the invention has the advantage that the tracer feed direction can easily be changed even during tracing.

## Claims

1. An arbitrary-direction tracer control unit comprising a tracer head (TH,1) for outputting a deflection signal ($\epsilon$) corresponding to the deflection of a stylus (ST,2) in contact with the surface of a model, characterised by: a memory (M,19) for storing a commanded angle ($\alpha$) between a coordinate axis (X-axis) and the tracer feed axis (A); a correction angle setting means (COM,21) for setting a correction angle ($\Delta\alpha$) with respect to the tracer feed axis (A); an adder means (ADD,17) for adding together the commanded angle ($\alpha$) stored in the memory (M,19) and the correction angle ($\Delta\alpha$) set by the correction angle setting means (COM,21); and a tracing operation means (PRO,7 to 16) for obtaining, on the basis of the added output ($\alpha + \Delta\alpha$) of the adder means (ADD,17) and the deflection signal ($\epsilon$) from the tracer head (TH,1), feed rates in the axis directions (X,Y) in which the model and the stylus (ST,2) are moved relative to each other which will drive the tracer head (TH,1) relative to the model in a direction corresponding to the added output ($\alpha + \Delta\alpha$) from the adder means (ADD,17).

## Revendications

1. Une unité de commande de copiage en direction arbitraire, comprenant une tête de palpeur (TH, 1) qui est destinée à fournir un signal de déviation ($\epsilon$) correspondant à la déviation d'un palpeur (ST, 2) qui est en contact avec la surface d'un modèle, caractérisée par : une mémoire (M, 19) qui est destinée à enregistrer un angle commandé ($\alpha$) entre un axe de coordonnées (axe X) et l'axe d'avance du palpeur (A) ; des moyens de fixation d'angle de correction (COM, 21) qui sont destinés à fixer un angle de correction ($\Delta\alpha$) par rapport à l'axe d'avance du palpeur (A) ; des moyens additionneurs (ADD, 17) qui sont destinés à additionner ensemble l'angle commandé ($\alpha$) qui est enregistré dans la mémoire (M, 19) et l'angle de correction ($\Delta\alpha$) qui est fixé par les moyens de fixation d'angle de correction (COM, 21) ; et des moyens de commande d'opération de copiage (PRO, 7 à 16) qui sont destinés à obtenir, sur la base du signal de sortie additionné ($\alpha + \Delta\alpha$) des moyens additionneurs (ADD, 17; et du signal de déviation ($\epsilon$) provenant de la tête de palpeur (TH, 1), des vitesses d'avance dans les directions des axes (X, Y) selon lesquels le modèle et le palpeur (ST, 2) sont déplacés mutuellement, qui déplaceront la tête de palpeur (TH, 1) par rapport au modèle, dans une direction correspondant au signal de sortie additionné ($\alpha + \Delta\alpha$) qui provient des moyens additionneurs (ADD, 17).

## Patentansprüche

1. Abtaster-Steuereinheit zum Abtasten in beliebigen Richtungen, die einen Abtastkopf (TH, 1) zum Ausgeben eines Auslenkungssignals ($\epsilon$) umfaßt, das der Auslenkung eines Taststifts (ST, 2) entspricht, der in Berührung mit der Oberfläche eines Modells steht, **gekennzeichnet** durch einen Speicher (M, 19) zum Speichern eines befohlenen Winkels ($\alpha$) zwischen einer Koordinatenachse (X-Achse) und der Abtastvorschubachse (A), ein Korrekturwinkel-Einstellmittel (COM, 21) zum Einstellen eines Korrekturwinkels ($\Delta\alpha$) in bezug auf die Abtastvorschubachse (A), ein Addiermittel (ADD, 17) zum Addieren des befohlenen Winkels ($\alpha$), der in dem Speicher (M,19) gespeichert ist, und des Korrekturwinkels ($\Delta\alpha$), der durch das Korrekturwinkel-Einstellmittel (COM, 21) eingestellt ist, und ein Abtast-Operationsmittel (PRO, 7 bis 16) zum Gewinnen von Vorschubraten in den Achsenrichtungen (X, Y), in welchen das Modell und der Taststift (ST, 2) relativ zueinander bewegt werden, auf der Grundlage des addierten Ausgangssignals ($\alpha + \Delta\alpha$) des Addiermittels (ADD, 17) und des Auslenkungssignals ($\epsilon$) aus dem Abtastkopf (TH, 1), welche Vorschubraten den Abtastkopf (TH, 1) relativ zu dem Modell in einer Richtung treiben, die dem addierten Ausgangssignal ($\alpha + \Delta\alpha$) aus dem Addiermittel (ADD, 17) entspricht.

FIG. 1

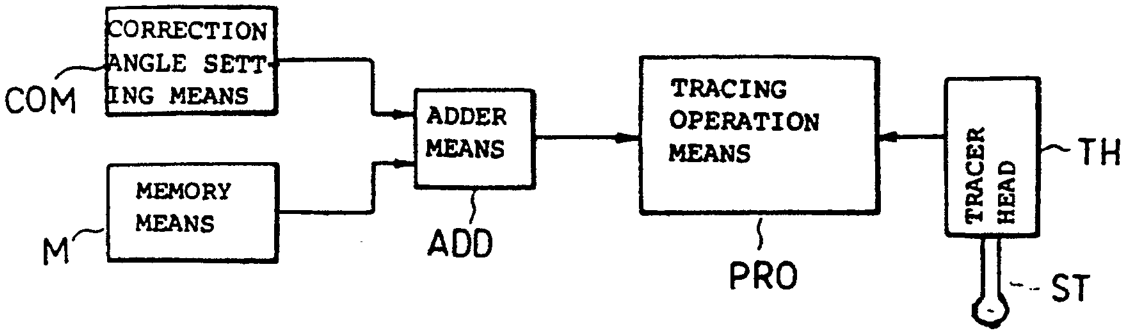
CORRECTION ANGLE SETTING MEANS
COM
MEMORY MEANS
M
ADDER MEANS
ADD
TRACING OPERATION MEANS
PRO
TRACER HEAD
TH
ST

FIG. 5

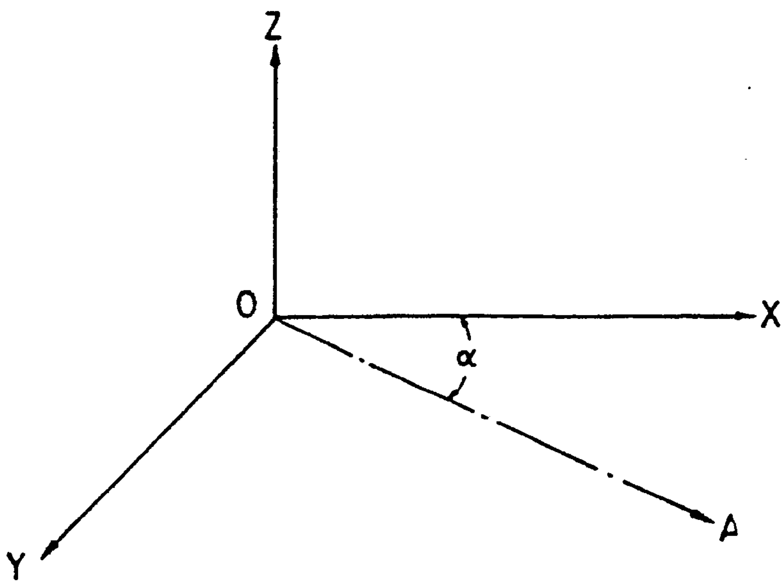
Z
O
X
α
Y
A

FIG. 2

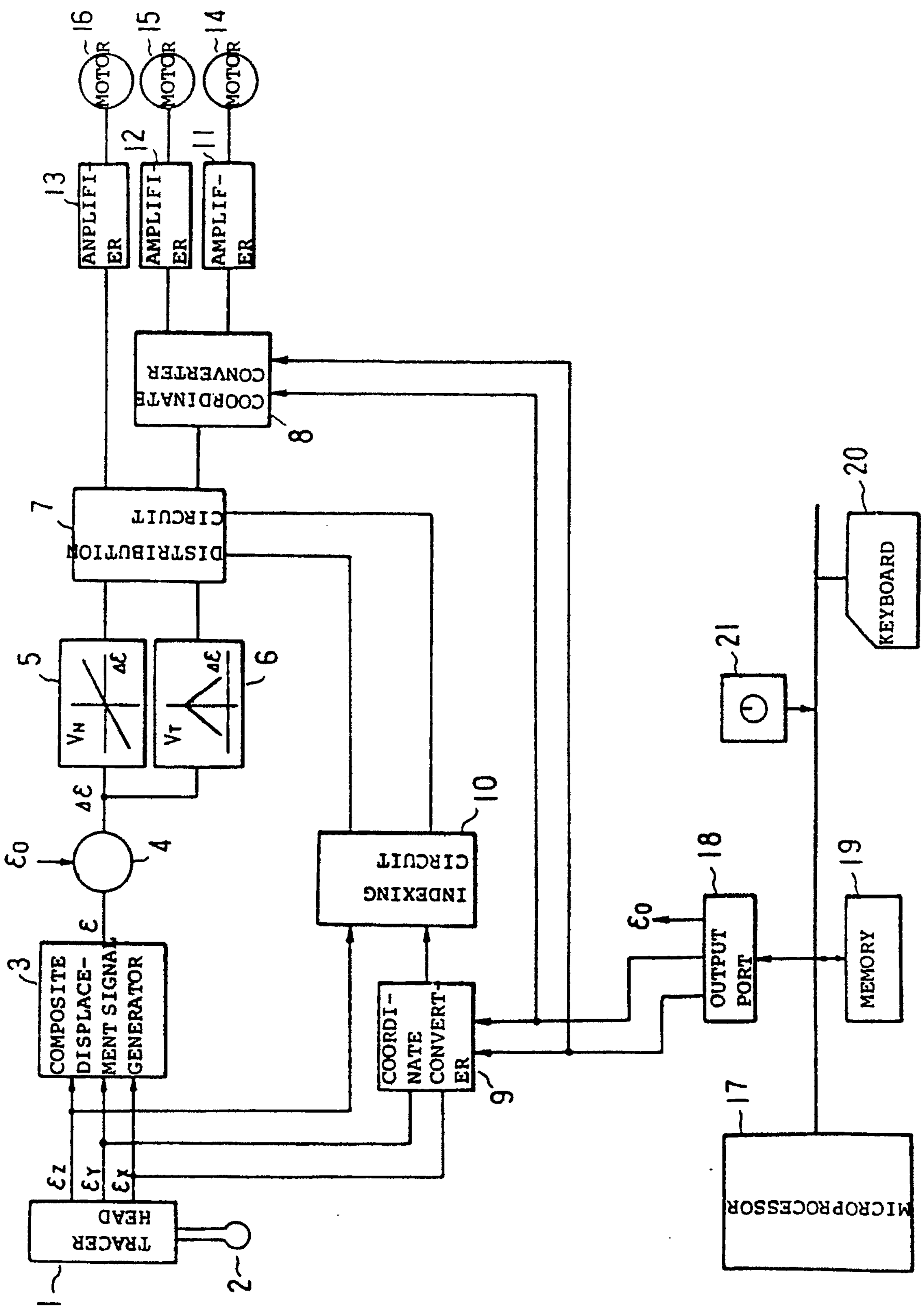
TRACER HEAD
COMPOSITE DISPLACE- MENT SIGNAL GENERATOR
DISTRIBUTION CIRCUIT
COORDINATE CONVERTER
ANPLIFI- ER
AMPLIFI- ER
AMPLIF- ER
MOTOR
MOTOR
MOTOR
INDEXING CIRCUIT
COORDI- NATE CONVERT- ER
OUTPUT PORT
MEMORY
KEYBOARD
MICROPROCESSOR

FIG. 3

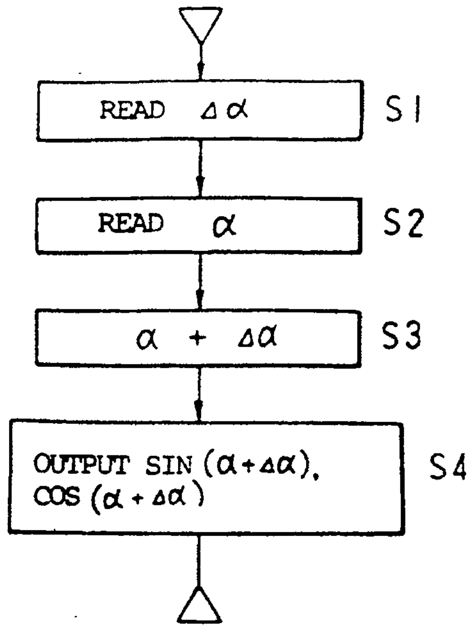


FIG. 4